# EUROPÄISCHE PATENTSCHRIFT

(11) **EP 1 996 462 B1**
(45) Veröffentlichungstag und Bekanntmachung des Hinweises auf die Patenterteilung: **14.03.2012**
(21) Anmeldenummer: 07702810.8
(22) Anmeldetag: 17.01.2007
(51) Int. Cl.: B64D 11/06, B60N 2/02

(54) **SITZVORRICHTUNG**
SEAT
ENSEMBLE SIÈGE

(30) Priorität: 18.03.2006 DE 102006012602
(43) Veröffentlichungstag der Anmeldung: 03.12.2008
(73) Patentinhaber: Recaro Aircraft Seating GmbH & Co. KG, 74523 Schwäbisch Hall (DE)
(72) Erfinder: KRÄMER, Marco, 74549 Wolpertshausen (DE)
(74) Vertreter: Daub, Thomas
(86) Internationale Anmeldenummer: PCT/EP2007/000353
(87) Internationale Veröffentlichungsnummer: WO 2007/107194

(56) Entgegenhaltungen:
- DE-A1- 3 609 690
- DE-A1- 4 403 073
- DE-A1- 19 522 897
- DE-A1- 19 811 959
- FR-A1- 2 736 879
- FR-A1- 2 838 887
- FR-A1- 2 859 175
- US-A- 4 707 788
- US-A- 5 285 139
- US-A1- 2002 113 478
- US-A1- 2002 185 985

## Beschreibung

### Stand der Technik

Die Erfindung betrifft eine Sitzvorrichtung nach dem Oberbegriff des Anspruchs 1 sowie ein Verfahren zur Betätigung zumindest einer Sitzkomponente einer Sitzvorrichtung.

Aus der WO 02/066325 A1 ist eine Sitzvorrichtung bekannt, die eine Bewegung von Sitzkomponenten innerhalb einer so genannten Hüllkurve ermöglicht. Die Sitzvorrichtung umfasst eine Überwachungseinrichtung, die die Sitzkomponenten dergestalt ansteuert, dass zum einen für alle Sitzkomponenten eine sinnfällige Bewegungsablaufsituation für einen Sitzbenutzer erreicht wird und zum andern dennoch gleichzeitig ein Kollisionsschutz für alle Komponenten gewährleistet ist.

Die DE 195 22 897 A1 offenbart einen Sitz, der eine erste Verstelleinrichtung und weitere Verstelleinrichtungen mit entsprechenden Stellantrieben, ein die Stellantriebe ansteuerndes Steuergerät, einen Speicher zur Abspeicherung vorgebbarer, vom Steuergerät abrufbarer Stellpositionen und einen Sensor zur Stellpositionserkennung umfasst. Der Speicher weist Kennlinien auf, die in Abhängigkeit der Stellposition der ersten Verstelleinrichtung Soll-Stellpositionen der weiteren Verstelleinrichtungen festlegen. Des Weiteren erkennt der Sensor eine Ist-Stellposition der ersten Verstelleinrichtung und stellt die weiteren Verstelleinrichtungen durch Ansteuerung der Stellantriebe in ihre Soll-Stellposition.

Der Erfindung liegt die objektive technische Aufgabe zugrunde, einen gattungsgemäßen Sitz bereitzustellen, bei welchem ein verbesserter Komfort erreicht werden kann.

### Vorteile der Erfindung

Die Erfindung geht aus von einer Sitzvorrichtung, insbesondere einer Flugzeugsitzvorrichtung, mit zumindest einer Sitzkomponente, mit zumindest einem Aktuator, der zu einer Einstellung einer Position der Sitzkomponente vorgesehen ist, mit einer Recheneinheit, die zu einer Betätigung des Aktuators vorgesehen ist, und mit einer Speichereinheit, in der zumindest ein Komfortpositionsübergangsdatensatz zur Erzielung eines Komfortpositionsübergangs zwischen wenigstens zwei von Komfortpositionen gebildeten, fest vorbestimmten Positionen der Sitzkomponente gespeichert ist, wobei ein Punkt auf der Sitzkomponente bei dem Komfortpositionsübergang einer fest vorbestimmten Raumkurve folgt und wobei die Recheneinheit in zumindest einem Betriebsmodus dazu vorgesehen ist, den Aktuator gemäß dem Komfortpositionsübergangsdatensatz zur Erzielung des Komfortpositionsübergangs zu betätigen. Unter einer "Komfortposition" soll dabei insbesondere eine fest vorbestimmte Position verstanden werden, wie insbesondere bei einer Flugzeugsitzvorrichtung eine oder mehrere Lande- und Startpositionen, eine oder mehrere Ruhe- bzw. Entspannungspositionen, eine oder mehrere Essenspositionen, eine oder mehrere Arbeitspositionen usw. Unter einem "Komfortpositionsübergang" soll insbesondere ein fest vorbestimmter Übergang zwischen zwei Komfortpositionen verstanden werden, so dass insbesondere Sitzkomponentenpunkte bzw. Punkte auf Sitzkomponenten beim Übergang zwischen zwei Komfortpositionen fest vorbestimmten Raumkurven folgen, wobei sich die Raumkurven vorzugsweise durch zumindest teilweise gleichzeitige Betätigung von Aktuatoren ergeben. Unter einer "Recheneinheit" soll insbesondere eine Steuerungs- und/oder eine Regelungseinheit mit einem oder mehreren Prozessoren und vorzugsweise einem oder mehreren Speichereinheiten verstanden werden, wobei die Recheneinheit auch aus mehreren dezentralen Untereinheiten bestehen kann, wie beispielsweise dezentral angeordneten Recheneinheiten. Ferner soll unter "vorgesehen" insbesondere speziell ausgestattet, ausgelegt und/oder programmiert verstanden werden.

Es wird vorgeschlagen, dass in der Speichereinheit wenigstens ein Datensatz gespeichert ist, der einen Bereich definiert, in welchem individuelle Anpassungen an der Position der Sitzkomponente zugelassen sind.

Hierdurch kann der Endnutzer eine für ihn angenehmere Sitzposition einnehmen. Die individuelle Anpassung des Sitzes innerhalb eines Bereichs kann in vorteilhafter Weise ungewollte automatische Nachstellungen anderer Bereiche vermeiden.

Sind in der Speichereinheit wenigstens zwei Komfortpositionsübergangsdatensätze für zumindest zwei Komfortpositionen gespeichert, können vorteilhaft mehrere entsprechende Bewegungsabläufe, insbesondere zwischen mehr als zwei Komfortpositionen, erzielt werden. Grundsätzlich ist jedoch auch denkbar, dass zwei Komfortpositionsübergangsdatensätze einem Übergang zwischen zwei Komfortpositionen zugeordnet sind und/oder auch, dass ein Komfortpositionsübergangsdatensatz mehreren Übergängen zugeordnet ist.

Alternativ oder insbesondere zusätzlich zu Daten zur Erzielung fest vorbestimmter Raumkurven weist der Komfortpositionsübergangsdatensatz vorzugsweise Daten zu wenigstens einer Stellgeschwindigkeit des Aktuators auf, wodurch eine hohe Flexibilität und insbesondere ein hoher Komfort erreicht werden können, und zwar insbesondere, wenn die Recheneinheit dazu vorgesehen ist, abhängig von den Daten zu der wenigstens einen Stellgeschwindigkeit des Aktuators den Aktuator in der Weise zu betätigen, dass in einem Bereich vor einer Komfortposition sich eine abnehmende Stellgeschwindigkeit einstellt, so dass ein harmonischer Übergang erreicht werden kann.

In einer weiteren Ausgestaltung der Erfindung wird vorgeschlagen, dass die Speichereinheit Daten zur Ansteuerung wenigstens einer Polsterausdehnungseinheit aufweist und die Recheneinheit zur Betätigung der Posterausdehnungseinheit vorgesehen ist. Dabei soll unter einer Polsterausdehnungseinheit insbesondere eine Einheit verstanden werden, die dazu vorgesehen ist, eine Ausdehnung einer Polstereinheit in zumindest eine Richtung zu vergrößern und/oder zu verkleinern. Vorzugsweise ist die Polsterausdehnungseinheit insbesondere zumindest teilweise von einer Pumpeinheit gebildet, mittels der Luft in oder aus einer Polstereinheit gepumpt werden kann. Durch eine entsprechende erfindungsgemäße Ausgestaltung kann eine vorteilhafte Überlagerung einer Stellbewegung eines Aktuators und der Polsterausdehnungseinheit erzielt werden und der Komfort kann weiter gesteigert werden.

Um insbesondere einem Endnutzer, wie einem Flugzeugpassagier, eine individuelle Anpassung zu ermöglichen, ist die Recheneinheit dazu vorgesehen, in der Speichereinheit wenigstens eine Komfortposition abzuspeichern, und/oder die Sitzvorrichtung weist ein Mittel zur Deaktivierung des Betriebsmodus zum Betrieb, basierend auf wenigstens einem Komfortpositionsübergangsdatensatz, auf. Wurde eine individuelle Anpassung von einem Endnutzer innerhalb eines vorgegebenen Bereichs vorgenommen und soll anschließend ein Übergang in eine weitere Komfortposition durchgeführt werden, wird vorzugsweise automatisch zuerst die individuelle Anpassung zurückgeführt, so dass mit geringem Rechenaufwand und ohne Kollisionsgefahr der Übergang zur angestrebten Komfortposition realisiert werden kann. Wird der Betriebsmodus deaktiviert, wird vorzugsweise ein weiterer Betriebsmodus aktiviert, wie beispielsweise ein Betriebsmodus, bei dem eine freie Verstellung innerhalb einer so genannten Hüllkurve möglich ist.

Ferner wird vorgeschlagen, dass die Recheneinheit dazu vorgesehen ist, abhängig von wenigstens einem Parameter zumindest teilautomatisiert eine Anpassung wenigstens eines Komfortpositionsübergangs vorzunehmen. Wird anhand des Parameters eine bestimmte Situation erkannt, wie insbesondere eine Notsituation, kann eine zumindest teilweise und vorzugsweise vollautomatische Anpassung des Übergangs an die Situation erreicht werden und der Übergang kann gegenüber einem besonders komfortablen Übergang schneller, langsamer und/oder auch energiesparender durchgeführt werden. Hierbei sind vorzugsweise entsprechende Daten in der speichereinheit gespeichert.

Weist die Sitzvorrichtung eine Kollisionsüberwachungseinheit auf, können Kollisionen besonders sicher vermieden werden, insbesondere auch dann, wenn der Betriebsmodus zum Betrieb, basierend auf wenigstens einem Komfortpositionsübergangsdatensatz, ausfällt oder deaktiviert wird. Dabei sind grundsätzlich sämtliche, dem Fachmann als sinnvoll erscheinende Kollisionsüberwachungseinheiten denkbar. Vorteilhaft weist die Kollisionsüberwachungseinheit jedoch eine Speichereinheit mit darin gespeicherten, wenigstens eine Grenzkurve beschreibenden Daten auf und besonders vorteilhaft ist die Kollisionsüberwachungseinheit entsprechend der in der Druckschrift WO 02/066325 A1 beschriebenen Kollisionsüberwachungseinheit ausgeführt. Hierzu wird auf die gesamte Beschreibung der Druckschrift WO 02/066325 A1 verwiesen, die ausdrücklich als zur Offenbarung gehörend angesehen werden soll.

Die erfindungsgemäße Lösung eignet sich grundsätzlich bei sämtlichen dem Fachmann als geeignet erscheinenden Sitzvorrichtungen, jedoch besonders vorteilhaft bei Flugzeugsitzvorrichtungen, die häufig besonders zahlreiche Komfortpositionen aufweisen und die in beengten Platzverhältnissen und durch Betätigung von besonders zahlreichen Aktuatoren eingestellt werden müssen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematisiert dargestellten Flugzeugsitz bei einem ersten Komfortpositionsübergang zwischen zwei Komfortpositionen mit einer erfindungsgemäßen Flugzeugsitzvorrichtung und
- Fig. 2: den Flugzeugsitz bei einem zweiten Komfortpositionsübergang zwischen zwei Komfortpositionen.

### Beschreibung des Ausführungsbeispiels

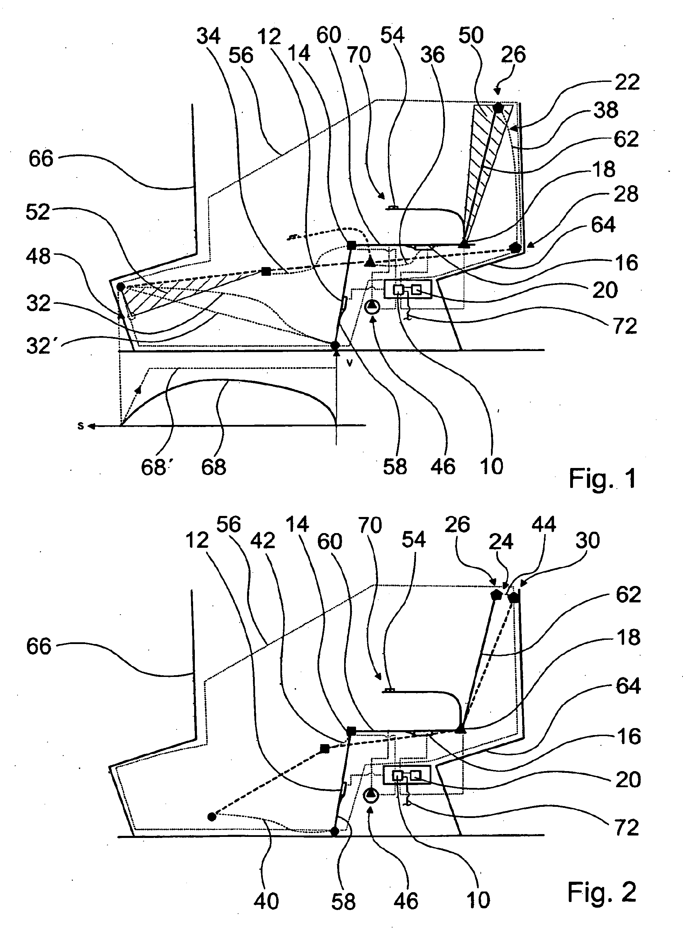

Figur 1 zeigt einen schematisiert dargestellten Flugzeugsitz bei einem ersten Komfortpositionsübergang 22 zwischen einer von einer Start-/Landeposition gebildeten ersten Komfortposition 26 und einer von einer Bettposition gebildeten zweiten Komfortposition 28. In Figur 2 ist der Flugzeugsitz bei einem zweiten Komfortpositionsübergang 24 zwischen der ersten Komfortposition 26 und einer von einer Ruheposition gebildeten weiteren Komfortposition 30 dargestellt. Neben den nur beispielhaft dargestellten Komfortpositionen 26, 28, 30 sind noch zahlreiche weitere Komfortpositionen und Komfortpositionsübergänge denkbar.

Der Flugzeugsitz ist in Längsrichtung eines Flugzeugs zwischen einer ihm zugeordneten rückwärtigen Umhausung 64 und einer einem nicht näher dargestellten Vordersitz zugeordneten rückwärtigen Umhausung 66 angeordnet.

Der Flugzeugsitz weist eine erfindungsgemäße Flugzeugsitzvorrichtung mit mehreren Sitzkomponenten 58, 60, 62, mehreren Aktuatoren 12, 14, 16, 18, die zu einer Einstellung von Positionen der Sitzkomponenten 58, 60, 62 vorgesehen sind, und einer von einer Steuerungs- und Regelungseinheit gebildeten Recheneinheit 10 auf, die zur Betätigung der Aktuatoren 12, 14, 16, 18 zur Einstellung der Positionen der Sitzkomponenten 58, 60, 62 vorgesehen ist. Der Aktuator 12 ist zum Ein- und Ausfahren bzw. zum Verlängern und Verkürzen der von einer Beinauflage gebildeten Sitzkomponente 58, der Aktuator 14 ist zum Schwenken der Sitzkomponente 58, der Aktuator 16 ist zum Verstellen einer Sitztiefe der von einem Sitzboden gebildeten Sitzkomponente 60 und der Aktuator 18 ist zum Schwenken der von einer Rückenlehne gebildeten Sitzkomponente 62 vorgesehen.

Ferner weist die Flugzeugsitzvorrichtung eine elektronische Speichereinheit 20 auf, in der Komfortpositionsübergangsdatensätze zur Erzielung der Komfortpositionsübergange 22, 24, zwischen den Komfortpositionen 26, 28, 30 gespeichert sind, wobei die Recheneinheit 10 mit der Speichereinheit 20 und mit den Aktuatoren 12, 14, 16, 18 gekoppelt ist und in einem Betriebsmodus dazu vorgesehen ist, die Aktuatoren 12, 14, 16, 18 gemäß den Komfortpositionsübergangsdatensätzen zur Erzielung der Komfortpositionsübergänge 22, 24 zu betätigen bzw. anzusteuern.

Die Komfortpositionsübergangsdatensätze weisen Daten zur Erzielung vorbestimmter Raumkurven 32 - 44 auf. Bei den Komfortpositionsübergängen 22, 24 werden die Aktuatoren 12, 14, 16, 18 grundsätzlich zeitgleich angesteuert, so dass sich die Sitzkomponenten 58, 60, 62 mit ihren jeweiligen Endpunkten jeweils auf einer der skizzierten Raumkurven 32 - 44 bewegen. Dabei werden unabhängig von einer Übergangsrichtung die gleichen Raumkurven 32 - 44 beschrieben. Grundsätzlich wäre jedoch auch denkbar, dass für einen Übergang in eine Richtung und einen Übergang in eine entgegengesetzte Richtung zumindest teilweise unterschiedliche Raumkurven beschrieben werden. Zudem wäre grundsätzlich auch zumindest eine teilweise sequentielle Betätigung der Aktuatoren 12, 14, 16, 18 denkbar.

Ferner umfasst der Komfortpositionsübergangsdatensatz Daten zu Stellgeschwindigkeiten der Aktuatoren 12, 14, 16, 18. In Figur 1 ist in einem Diagramm eine Verstellgeschwindigkeit v eines Endpunkts der Sitzkomponente 58 über einem Weg s auf der Raumkurve 32 dargestellt. Dabei
ist zu erkennen, dass die Recheneinheit 10 während des Komfortpositionsübergangs 22 von der Komfortposition 26 zur Komfortposition 28 die Aktuatoren 12, 14 in der Weise betätigt, dass der der Sitzkomponente 60 abgewandte Endpunkt der Sitzkomponente 58 entsprechend einer Funktion 68 zuerst mit einer zunehmenden Verstellgeschwindigkeit v und vor Erreichen einer der Komfortposition 28 zugeordneten Endstellung mit einer abnehmenden Verstellgeschwindigkeit v bewegt wird.

Die Speichereinheit 20 weist ferner Daten zur Ansteuerung einer eine Luftpumpe umfassenden Polsterausdehnungseinheit 46 auf, wobei die Recheneinheit 10 mit der Polsterausdehnungseinheit 46 gekoppelt und zur Betätigung der Polsterstausdehnungseinheit 46 vorgesehen ist, und zwar wird zeitgleich zu den Aktuatoren 12, 14, 16, 18 die Polsterausdehnungseinheit 46 angesteuert, um einen Übergang zwischen einem der Komfortposition 26 zugeordneten Polstervolumen und einem der Komfortposition 28 zugeordneten Postervolumen zu erreichen.

Ferner sind in der Speichereinheit 20 Datensätze gespeichert, die Bereiche 50, 52 definieren, in welchen, veranlasst durch einen Endnutzer, wie insbesondere einen Flugzeugpassagier, individuelle Anpassungen an der Position der Sitzkomponenten 58, 60, 62 zugelassen sind. Beispielsweise kann die Sitzkomponente 58 über eine Bedieneinheit 70, ausgehend von der Komfortposition 28, innerhalb des Bereichs 52 weiter nach unten geschwenkt werden und die Sitzkomponente 62 kann, ausgehend von der Komfortposition 26, innerhalb des Bereichs 50 nach vorn und nach hinten geschwenkt werden. Die Recheneinheit 10 ist dazu vorgesehen, in der Speichereinheit 20 Komfortpositionen 48 abzuspeichern, so dass nach einer individuellen Einstellung über die Bedieneinheit 70 von einem Endnutzer die individuell eingestellte Position als Komfortposition 48 abgespeichert werden kann, wie dies in Figur 1 angedeutet ist. Während eines Komfortpositionsübergangs 22, 24 kann von einem Endnutzer jederzeit der Verstellvorgang gestoppt werden und die erreichte Zwischenposition kann ferner als individuelle Komfortposition abgespeichert werden.

Die Flugzeugsitzvorrichtung weist zudem eine Kollisionsüberwachungseinheit auf, die im Wesentlichen durch die Recheneinheit 10 und die Speichereinheit 20 gebildet ist, wobei in der Speichereinheit 20 Daten gespeichert sind, die eine eine Hüllkurve bildende Grenzkurve 56 beschreiben. Die Sitzkomponenten 58, 60, 62 können mit keinem Bestandteil aus der Grenzkurve 56 herausgefahren werden bzw, diese können nur innerhalb der Grenzkurve 56 bewegt werden. Die Kollisionsüberwachungseinheit ist stets aktiv, so dass auch bei einer fehlerhaften Raumkurve 32 - 44 bei einem Komfortpositionsübergang 22, 24 stets sichergestellt ist, dass eine Kollision vermieden wird.

Die Bedieneinheit 70 weist zudem ein Mittel 54 auf, das zur Deaktivierung des Betriebsmodus zum Betrieb, basierend auf den Komfortpositionsübergangsdatensätzen, vorgesehen ist. Wird der Betriebsmodus, basierend auf den Komfortpositionsübergangsdatensätzen, deaktiviert, wird automatisch ein Betriebmodus aktiviert, bei dem innerhalb der Grenzkurve 56 eine individuelle Verstellung möglich ist bzw. es wird ein Betriebsmodus aktiviert, der mit einem in der WO 02/066325 A1 beschriebenen Betriebsmodus übereinstimmt, wobei auf die Beschreibung der wo 02/066325 A1 verwiesen werden darf.

Ferner ist die Recheneinheit 10 dazu vorgesehen, abhängig von einem über eine Datenleitung 72 der Recheneinheit 10 zuführbaren Parameter, automatisiert eine Anpassung des Komfortpositionsübergangs 22 vorzunehmen. Hierfür sind entsprechende Daten in der Speichereinheit 20 gespeichert. Wird in der Komfortposition 28 der Recheneinheit 10 ein Parameter übermittelt, der einem Notfall zugeordnet ist, in dem ein möglichst schneller Komfortpositionsübergang realisiert werden soll, werden mittels der Recheneinheit 10 höhere Stellgeschwindigkeiten der Aktuatoren 12, 14, 16, 18 eingestellt. In Figur 1 ist im Diagramm die Verstellgeschwindigkeit v des der Sitzkomponente 60 abgewandten Endpunkts der Sitzkomponente 58 über einem Weg s auf einer angepassten Raumkurve 32' dargestellt. Dabei ist zu erkennen, dass die Recheneinheit 10 während des angepassten Komfortpositionsübergangs 22 von der Komfortposition 28 zur Komfortposition 26 die Aktuatoren 12, 14 in der Weise betätigt, dass der der Sitzkomponente 60 abgewandte Endpunkt der Sitzkomponente 58 entsprechend einer Funktion 68' nach einer Startphase stets mit maximaler Geschwindigkeit bewegt wird.

### Bezugszeichen

- 10: Recheneinheit
- 12: Aktuator
- 14: Aktuator
- 16: Aktuator
- 18: Aktuator
- 20: Speichereinheit
- 22: Komfortpositionsübergang
- 24: Komfortpositionsübergang
- 26: Komfortposition
- 28: Komfortposition
- 30: Komfortposition
- 32: Raumkurve
- 34: Raumkurve
- 36: Raumkurve
- 38: Raumkurve
- 40: Raumkurve
- 42: Raumkurve
- 44: Raumkurve
- 46: Polsterausdehnungseinheit
- 48: Komfortposition
- 50: Bereich
- 52: Bereich
- 54: Mittel
- 56: Grenzkurve
- 58: Sitzkomponente
- 60: Sitzkomponente
- 62: Sitzkomponente
- 64: Umhausung
- 66: Umhausung
- 68: Funktion
- 70: Bedieneinheit
- 72: Datenleitung
- v: Verstellgeschwindigkeit
- s: Weg

## Patentansprüche

1. Sitzvorrichtung, insbesondere Flugzeugsitzvorrichtung, mit zumindest einer Sitzkomponente (58, 60, 62), mit zumindest einem Aktuator (12, 14, 16, 18), der zu einer Einstellung einer Position der Sitzkomponente (58, 60, 62) vorgesehen ist, mit einer Recheneinheit (10), die zu einer Betätigung des Aktuators (12, 14, 16, 18) zur Einstellung der Position der Sitzkomponente (58, 60, 62) vorgesehen ist, und mit einer Speichereinheit (20), in der zumindest ein Komfortpositionsübergangsdatensatz zur Erzielung eines Komfortpositionsübergangs (22, 24) zwischen wenigstens zwei von Kcmfortpositionen (26, 28, 30) gebildeten, fest vorbestimmten Positionen der Sitzkcmponente (58, 60, 62) gespeichert ist, wobei ein Punkt auf der Sitzkomponente (58, 60, 62) bei dem Komfortpositionsübergang (22, 24) einer fest vorbestimmten Raumkurve (32 - 44) folgt und wobei die Recheneinheit (10) in zumindest einem Betriebsmodus dazu vorgesehen ist, den Aktuator (12, 14, 16, 18) gemäß dem Komfortpositionsübergangsdatensatz zur Erzielung des Komfortpositionsübergangs (22, 24) zu betätigen,
**dadurch gekennzeichnet,**
**dass** in der Speichereinheit (20) wenigstens ein Datensatz gespeichert ist, der einen Bereich (50, 52) definiert, in welchem individuelle Anpassungen an der Position der Sitzkomponente (58, 60, 62) zugelassen sind.

2. Sitzvorrichtung nach Anspruch 1,
**dadurch gekennzeichnet,**
**dass** in der Speichereinheit (20) wenigstens zwei Komfortpositionsübergangsdatensätze für zumindest zwei Komfortpositionsübergänge (22, 24) gespeichert sind.

3. sitzvorrichtung nach Anspruch 1 oder 2,
**dadurch gekennzeichnet,**
**dass** der Komfortpositionsübergangsdatensatz Daten zur Erzielung der vorbestimmten Raumkurve (32 - 44) aufweist.

4. Sitzvorrichtung nach einem der vorhergehenden Ansprüche,
**dadurch gekennzeichnet,**
**dass** der Komfortpositionsübergangsdatensatz Daten zu wenigstens einer Stellgeschwindigkeit des Aktuators (12, 14, 16, 18) umfasst.

5. Sitzvorrichtung nach Anspruch 4,
**dadurch gekennzeichnet,**
**dass** die Recheneinheit (10) dazu vorgesehen ist, abhängig von den Daten zu der wenigstens einen Stellgeschwindigkeit des Aktuators (12, 14, 16, 18) den Aktuator (12, 14) in der Weise zu betätigen, dass in einem Bereich vor einer Komfortposition (28) sich eine abnehmende Stellgeschwindigkeit des Aktuators (12, 14, 16, 18) einstellt.

6. Sitzvorrichtung nach einem der vorhergehenden Ansprüche,
**dadurch gekennzeichnet,**
**dass** die Speichereinheit (20) Daten zur Ansteuerung wenigstens einer Polsterausdehnungseinheit (46) aufweist und die Recheneinheit (10) zur Betätigung der Polsterausdehnungseinheit (46) vorgesehen ist.

7. Sitzvorrichtung nach einem der vorhergehenden Ansprüche,
**dadurch gekennzeichnet,**
**dass** die Recheneinheit (10) dazu vorgesehen ist, in der Speichereinheit (20) wenigstens eine Komfortposition (48) abzuspeichern.

8. Sitzvorrichtutzg nach einem der vorhergehenden Ansprüche,
**gekennzeichnet durch**
ein Mittel (54) zur Deaktivierung des auf wenigstens einem Komfortpositionsübergangsdatensatz basierenden Betriebsmodus zum Betrieb.

9. Sitzvorrichtung nach einem der vorhergehenden Ansprüche,
**dadurch gekennzeichnet,**
**dass** die Recheneinheit (10) dazu vorgesehen ist, abhängig von wenigstens einem Parameter zumindest teilautomatisiert eine Anpassung wenigstens eines Komfortpositionsübergangs (22) vorzunehmen.

10. Sitzvorrichtung nach einem der vorhergehenden Ansprüche,
**gekennzeichnet durch**
eine Kollisionsüberwachungseinheit.

11. Sitzvorrichtung nach Anspruch 10,
**dadurch gekennzeichnet,**
**dass** die Kollisionsüberwachungseinheit eine Speichereinheit (20) mit darin gespeicherten, wenigstens eine Grenzkurve (56) beschreibenden Daten aufweist.

12. Verfahren zur Betätigung zumindest einer Sitzkomponente (58, 60, 62) einer Sitzvorrichtung, insbesondere einer Flugzeugsitzvorrichtung, mit zumindest einem Aktuator (12, 14, 16, 18), der zu einer Einstellung einer Position der Sitzkomponente (58, 60, 62) vorgesehen ist, mit einer Recheneinheit (10), die zur Betätigung des zumindest einen Aktuators (14, 16, 18) zur Einstellung der Position der Sitzkomponente (58, 60, 62) vorgesehen ist, und mit einer Speichereinheit (20), in der zumindest ein Komfortpositionsübergangsdatensatz zur Erzielung eines Komfortpositionsübergangs (22, 24) zwischen wenigstens zwei von Komfortpositionen (26, 28, 30) gebildeten, fest vorbestimmten Positionen der Sitzkomponente (58, 60, 62) sowie wenigstens ein Datensatz, der einen Bereich (50, 52) definiert, in welchem individuelle Anpassungen an der Position der Sitzkomponente (58, 60, 62) zugelassen sind, gespeichert ist, wobei ein Punkt auf der Sitzkomponente (58, 60, 62) bei dem Komfortpositionsübergang (22, 24) einer fest vorbestimmten Raumkurve (32 - 44) folgt und wobei die Recheneinheit (10) in zumindest einem Betriebsmodus den Aktuator (12, 14, 16, 18) gemäß dem Komfortpositionsübergangsdatensatz zur Erzielung des Komfortpositionsübergangs (22, 24) betätigt.

## Claims

1. Seat device, in particular aircraft seat device, having at least one seat component (58, 60, 62), having at least one actuator (12, 14, 16, 18) which is provided for adjusting a position of the seat component (58, 60, 62), having a computation unit (10) which is provided for operating the actuator (12, 14, 16, 18) for adjusting the position of the seat component (58, 60, 62), and having a memory unit (20) which stores at least one comfort position transition data record for achieving a comfort position transition (22, 24) between at least two firmly predetermined positions of the seat component (58, 60, 62) implemented as comfort positions (26, 28, 30), a point on the seat component (58, 60, 62) following a firmly predetermined space curve (32 - 44) during the comfort position transition (22, 24), and the computation unit (10) being provided, in at least one operating mode, for the purpose of operating the actuator (12, 14, 16, 18) according to the comfort position transition data record in order to achieve the comfort position transition (22, 24),
**characterized in that**
the memory unit (20) stores at least one data record which defines a range (50, 52) in which individual adaptations to the position of the seat component (58, 60, 62) are allowed.

2. Seat device according to Claim 1,
**characterized in that**
the memory unit (20) stores at least two comfort position transition data records for at least two comfort position transitions (22, 24).

3. Seat device according to Claim 1 or 2,
**characterized in that**
the comfort position transition data record has data for achieving the predetermined space curve (32 - 44).

4. Seat device according to one of the preceding claims,
**characterized in that**
the comfort position transition data record comprises data relating to at least one adjustment speed of the actuator (12, 14, 16, 18).

5. Seat device according to Claim 4,
**characterized in that**
the computation unit (10) is provided for the purpose of operating the actuator (12, 14) on the basis of the data relating to the at least one adjustment speed of the actuator (12, 14, 16, 18) in such a manner that a decreasing adjustment speed of the actuator (12, 14, 16, 18) is established in a range before a comfort position (28).

6. Seat device according to one of the preceding claims,
**characterized in that**
the memory unit (20) has data for driving at least one upholstery extension unit (46), and the computation unit (10) is provided for the purpose of operating the upholstery extension unit (46).

7. Seat device according to one of the preceding claims,
**characterized in that**
the computation unit (10) is provided for the purpose of storing at least one comfort position (48) in the memory unit (20).

8. Seat device according to one of the preceding claims,
**characterized by**
a means (54) for deactivating the operating mode based on at least one comfort position transition data record, for operation.

9. Seat device according to one of the preceding claims,
**characterized in that**
the computation unit (10) is provided for the purpose of adapting at least one comfort position transition (22) in at least partially automated fashion on the basis of at least one parameter.

10. Seat device according to one of the preceding claims,
**characterized by**
a collision monitoring unit.

11. Seat device according to Claim 11,
**characterized in that**
the collision monitoring unit has a memory unit (20) with data which are stored therein and describe at least one limiting curve (56).

12. Method for operating at least one seat component (58, 60, 62) of a seat device, in particular of an aircraft seat device, having at least one actuator (12, 14, 16, 18) which is provided for adjusting a position of the seat component (58, 60, 62), having a computation unit (10) which is provided for the purpose of operating the at least one actuator (14, 16, 18) for adjusting the position of the seat component (58, 60, 62), and having a memory unit (20) which stores at least one comfort position transition data record for achieving a comfort position transition (22, 24) between at least two firmly predetermined positions of the seat component (58, 60, 62), implemented as comfort positions (26, 28, 30), and stores at least one data record which defines a range (50, 52) in which individual adaptations to the position of the seat component (58, 60, 62) are allowed, a point on the seat component (58, 60, 62) following a firmly predetermined space curve (32 - 44) during the comfort position transition (22, 24), and the computation unit (10) operating the actuator (12, 14, 16, 18) according to the comfort position transition data record in at least one operating mode in order to achieve the comfort position transition (22, 24).

## Revendications

1. Dispositif pour un siège, en particulier dispositif pour un siège d'avion, avec au moins un composant de siège (58, 60, 62), avec au moins un actuateur (12, 14, 16, 18) qui est prévu pour un réglage d'une position du composant de siège (58, 60, 62), avec une unité de calcul (10) qui est prévue pour une commande de l'actuateur (12, 14, 16, 18) pour le réglage de la position du composant de siège (58, 60, 62), et avec une unité de mémoire (20), dans laquelle est mémorisé au moins un jeu de données de changement de position de confort pour produire un changement de position de confort (22, 24) entre au moins deux positions du composant de siège (58, 60, 62) fixement prédéterminées, formées par des positions de confort (26, 28, 30), dans lequel un point du composant de siège (58, 60, 62) suit une courbe spatiale fixement prédéterminée (32 - 44) lors du changement de position de confort (22, 24) et dans lequel l'unité de calcul (10) est prévue, dans au moins un mode de fonctionnement, pour commander l'actuateur (12, 14, 16, 18) selon le jeu de données de changement de position de confort pour produire le changement de position de confort (22, 24), **caractérisé en ce que**, dans l'unité de mémoire (20), est mémorisé au moins un jeu de données qui définit une zone (50, 52), dans laquelle des adaptations individuelles de la position du composant de siège (58, 60, 62) sont autorisées.

2. Dispositif pour un siège selon la revendication 1, **caractérisé en ce qu'**au moins deux jeux de données de changement de position de confort pour au moins deux changements de position de confort (22, 24) sont mémorisés dans l'unité de mémoire (20).

3. Dispositif pour un siège selon la revendication 1 ou 2, **caractérisé en ce que** le jeu de données de changement de position de confort présente des données pour produire la courbe spatiale prédéterminée (32 - 44).

4. Dispositif pour un siège selon l'une quelconque des revendications précédentes, **caractérisé en ce que** le jeu de données de changement de position de confort comprend des données pour au moins une vitesse de réglage de l'actuateur (12, 14, 16, 18).

5. Dispositif pour un siège selon la revendication 4, **caractérisé en ce que** l'unité de calcul (10) est prévue pour commander l'actuateur (12, 14), en fonction des données pour ladite au moins une vitesse de réglage de l'actuateur (12, 14, 16, 18), de telle manière qu'il s'établisse une vitesse de réglage décroissante de l'actuateur (12, 14, 16, 18) dans une zone précédant une position de confort (28).

6. Dispositif pour un siège selon l'une quelconque des revendications précédentes, **caractérisé en ce que** l'unité de mémoire (20) présente des données pour commander au moins une unité d'extension de rembourrage (46) et l'unité de calcul (10) est prévue pour la commande de l'unité d'extension de rembourrage (46).

7. Dispositif pour un siège selon l'une quelconque des revendications précédentes, **caractérisé en ce que** l'unité de calcul (10) est prévue pour mémoriser au moins une position de confort (48) dans l'unité de mémoire (20).

8. Dispositif pour un siège selon l'une quelconque des revendications précédentes, **caractérisé par** un moyen (54) pour désactiver le mode de fonctionnement basé sur au moins un jeu de données de changement de position de confort pour le fonctionnement.

9. Dispositif pour un siège selon l'une quelconque des revendications précédentes, **caractérisé en ce que** l'unité de calcul (10) est prévue pour opérer, en fonction d'au moins un paramètre, de manière au moins partiellement automatisée, une adaptation d'au moins un changement de position de confort (22).

10. Dispositif pour un siège selon l'une quelconque des revendications précédentes, **caractérisé par** une unité de surveillance anti-collision.

11. Dispositif pour un siège selon la revendication 10, **caractérisé en ce que** l'unité de surveillance anti-collision présente une unité de mémoire (20), dans laquelle sont mémorisées des données décrivant au moins une courbe limite (56).

12. Procédé pour actionner au moins un composant de siège (58, 60, 62) d'un dispositif pour un siège, en particulier d'un dispositif pour un siège d'avion, avec au moins un actuateur (12, 14, 16, 18) qui est prévu pour un réglage d'une position du composant de siège (58, 60, 62), avec une unité de calcul (10) qui est prévue pour la commande dudit au moins un actuateur (14, 16, 18) pour le réglage de la position du composant de siège (58, 60, 62), et avec une unité de mémoire (20), dans laquelle sont mémorisés au moins un jeu de données de changement de position de confort pour produire un changement de position de confort (22, 24) entre au moins deux positions du composant de siège (58, 60, 62) fixement prédéterminées, formées par des positions de confort (26, 28, 30), ainsi qu'un jeu de données, qui définit une zone (50, 52) dans laquelle des adaptations individuelles de la position du composant de siège (58, 60, 62) sont autorisées, dans lequel un point du composant de siège (58, 60, 62) suit une courbe spatiale fixement prédéterminée (32 - 44) lors du changement de position de confort (22, 24) et dans lequel l'unité de calcul (10) commande, dans au moins un mode de fonctionnement, l'actuateur (12, 14, 16, 18) selon le jeu de données de changement de position de confort pour produire le changement de position de confort (22, 24).
